# EUROPEAN PATENT SPECIFICATION

(11) **EP 2 799 611 B1**
(45) Date of publication and mention of the grant of the patent: **03.08.2016**
(21) Application number: 14166349.2
(22) Date of filing: 29.04.2014
(51) Int. Cl.: D06F 37/06

(54) **Washing machine**
Waschmaschine
Machine à laver

(30) Priority: 30.04.2013 KR 20130048525
(43) Date of publication of application: 05.11.2014
(73) Proprietor: LG Electronics Inc., Seoul 07336 (KR)
(72) Inventor: Kim, Chihyun, 641-110 Kyungsangnam-do (KR); Kim, Dahye, 641-110 Kyungsangnam-do (KR); Eom, Sunyong, 641-110 Kyungsangnam-do (KR)
(74) Representative: Ter Meer Steinmeister & Partner

(56) References cited:
- EP-A1- 0 245 721
- EP-A1- 1 529 866
- EP-A1- 1 816 250
- EP-A1- 2 270 272
- US-A1- 2013 081 432

## Description

### BACKGROUND OF THE INVENTION

### 1. Field of the Invention

The present invention relates to a washing machine.

### 2. Description of the Related Art

Generally, a washing machine is an apparatus that performs washing, rinsing, and spinning cycles to remove contaminants from clothing and bedding (hereinafter, referred to as laundry) using water, detergent, and mechanical action.

The washing machine includes a tub containing wash water and a drum rotating while holding laundry. The drum rotates while being sufficiently filled with wash water such that laundry loaded therein can be soaked with wash water. The position of laundry is changed according to the operation pattern of the drum. Contaminants are removed from laundry by a chemical reaction of water and detergent or a physical force according to the position variation of laundry.

In a typical washing machine, when the drum rotates, a slight flow of wash water occurs. This is mainly caused by viscosity or friction between drum and wash water or the position change of laundry, but there is a limitation in evenly dissolving detergent in water.

Also, in order for laundry to be sufficiently soaked with water, the position change of laundry needs to be smoothly performed to allow laundry to be located at a lower part of the drum with a uniform probability. However, when a large amount of laundry exists in the drum, the position laundry is not sufficiently changed, making it difficult for laundry to be uniformly soaked. Accordingly, the drum needs to be operated for a longer time until the position of laundry is sufficiently changed, or needs to be supplied with much more water up to a higher level inside the drum.

EP 1 529 866 A1 relates to a drum type washing machine having axially-extending lifters arranged around an inner peripheral surface of a rotatable tub which is upwardly inclined to allow easy laundry loading and unloading. The lifters each have a height gradually reducing to correspond to the inclination angle of the rotatable tub from a rear end of the rotatable tub to a front end thereof. The lifter includes at least one partition plate which divides the interior of the lifter into at least two chambers. Accordingly, wash water raised by each lifter is uniformly sprayed throughout the length of the lifter.

EP 1 816 250 A1 relates to a front-loading clothes washing machine comprising a washing tub, a rotating drum contained in said tub and provided with an access opening and a rear wall, a plurality of internally hollow lifting ribs, as they are generally known as such in the art, arranged inside the drum, and provided internally with a respective partition wall, which is in the shape of a substantially planar quadrangle, a side of which coincides with the common side of the inclined walls of the lifting rib, while the opposite side lies on the inner surface of said drum in a roughly intermediate position between said walls. Said partition wall divides the inner volume of the respective lifting rib into two chambers that do not communicate with each other, and each one of said inclined walls is provided with at least a first respective aperture and a plurality of respective perforations adapted to let the respective one of said chambers communicate with the inner volume of the drum.

EP 0 245 721 A1 relates to a drum washing machine having a washing drum, with scoop devices being arranged on the drum circumference and constructed in such a way that they pick up the scooped water during the wetting phase in a position below the axis of rotation of the drum and discharge it into the interior of the drum in a position above the axis of rotation of the drum.

EP 2 270 272 A1 relates to a washing machine comprising a washing tub containing a drum comprising a base and a lateral surface with one or more first regions provided with apertures adapted for allowing a washing liquid contained in the tub to flow into and out of the drum, the lateral surface comprises one or more second regions which are not provided with the apertures adapted for allowing the washing liquid contained in the tub to flow into and out of the drum, furthermore, the drum comprises one or more hollow lifters, protruding from the lateral surface towards the internal part of the drum and provided with one or more outlet openings adapted to fluidly connect the internal part of the one or more lifters to the internal part of the drum in order to allow the release of a liquid contained in the one or more lifters inside the drum when the one or more lifters are in an upper region of the tub; the one or more lifters are associated with the one or more second regions of the lateral surface, the base of the drum being provided with one or more inlet apertures fluidly connecting the one ore more lifters to the external of the drum, so as to allow, during the rotation of the drum, the washing liquid present in a rear and bottom region of the tub to enter the one or more lifters.

US 2013/081432 A1 relates to a lifter simply mounted on a drum and a washing machine having the same. The washing machine includes a cabinet, a tub arranged within the cabinet, a drum arranged within the tub to accommodate laundry and rotated by rotary force transmitted from a driving source, and a plurality of lifters provided on the inner circumferential surface of the drum to move the laundry within the drum. Each of the plurality of lifters includes a plurality of hooks provided along a frame formed at the lower end of each of the plurality of lifters so as to allow each of the plurality of lifters to be hung to the drum, and at least one protrusion protruding from the lower end of each of the plurality of lifters so as to allow each of the plurality of lifters to be fixed to the inner circumferential surface of the drum.

### SUMMARY OF THE INVENTION

The present invention provides a washing machine, which can forcibly generate a flow of wash water by drawing up wash water and then discharging wash water into a drum during the rotation of the drum and can perform this forcible flow for a longer time during the rotation cycle of the drum.

The present invention also provides a washing machine, which can continuously discharge wash water from a front chamber and a rear chamber during the rotation of a drum by allowing the front and rear chambers to complementarily discharge wash water.

The present invention also provides a washing machine, which can more uniformly dissolve detergent in wash water inside a tub.

These objects are solved by the features of the independent claim . According to an aspect of the present invention, there is provided a washing machine including: a tub containing wash water; a drum rotating inside the tub and having more than one inlet to introduce wash water contained in the tub; a lifter forming a chamber holding wash water introduced through the inlet together with the drum and discharging wash water into the drum through a plurality of discharge holes arranged from a front side to a rear side inside the chamber during the rotation of the drum; and a partition dividing the chamber into a front chamber and a rear chamber along a longitudinal direction of the drum and forming a certain angle with respect to a circumference of the drum.

According to another aspect of the present invention, there is provided a washing machine including: a tub containing wash water; a drum rotating inside the tub and having more than one inlet to introduce wash water contained in the tub; a lifter rotating integrally with the drum and drawing up wash water introduced through the inlet to discharge wash water into the drum; and a partition forming a boundary dividing an internal space of the lifter containing wash water introduced through the inlet into a front chamber and a rear chamber, the boundary forming a certain angle with respect to a circumference of the drum.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view illustrating a washing machine according to an embodiment of the present invention;
FIG. 2 is a view illustrating a portion of a drum of FIG. 1;
FIG. 3 is a perspective view of a lifter;
FIG. 4 is a perspective view illustrating the inside of the lifter of FIG. 3 when viewed from the bottom;
FIG. 5 is a plan view illustrating the inside of the lifter of FIG. 3;
FIG. 6 is a view illustrating overlapped cross-sections taken along S1 and S2 of FIG. 2;
FIG. 7 is a view illustrating a position change of a front lifter according to a rotation of a drum, in which 7A shows a position change during a forward rotation of the drum and 7B shows a position change during a backward rotation of the drum; and
FIG. 8 is a view illustrating a position change of a rear lifter according to a rotation of a drum, in which 8A shows a position change during a backward rotation of the drum and 8B shows a position change during a forward rotation of the drum.

### DETAILED DESCRIPTION OF THE INVENTION

Advantages and features of the present invention and a method of achieving the same will be more clearly understood from embodiments described below with reference to the accompanying drawings. However, the present invention is not limited to the following embodiments but may be implemented in various different forms. The embodiments are provided merely to complete disclosure of the present invention and to fully provide a person having ordinary skill in the art to which the present invention pertains with the category of the invention. The invention is defined only by the category of the claims. Wherever possible, the same reference numbers will be used throughout the specification to refer to the same or like parts.

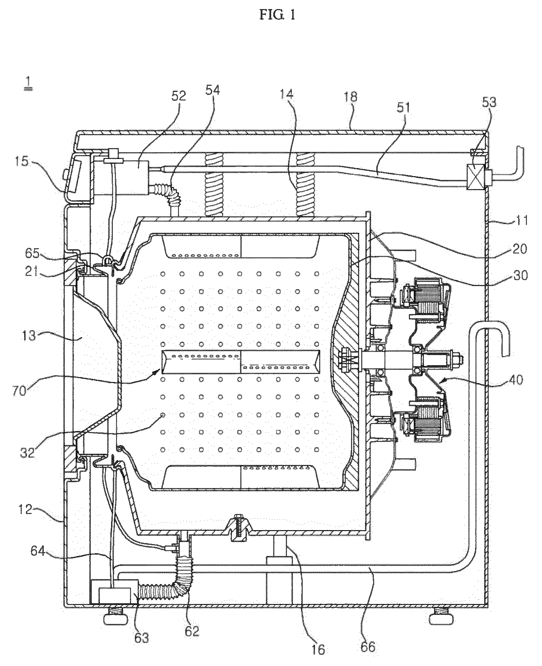

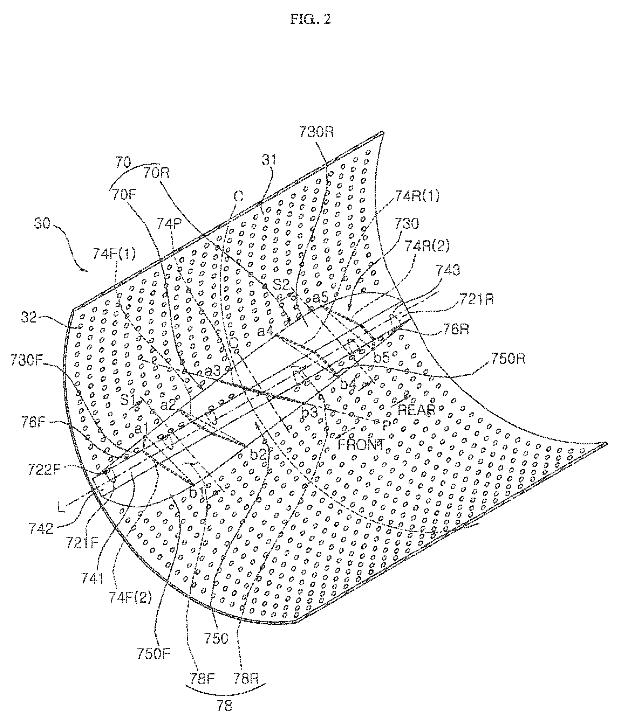

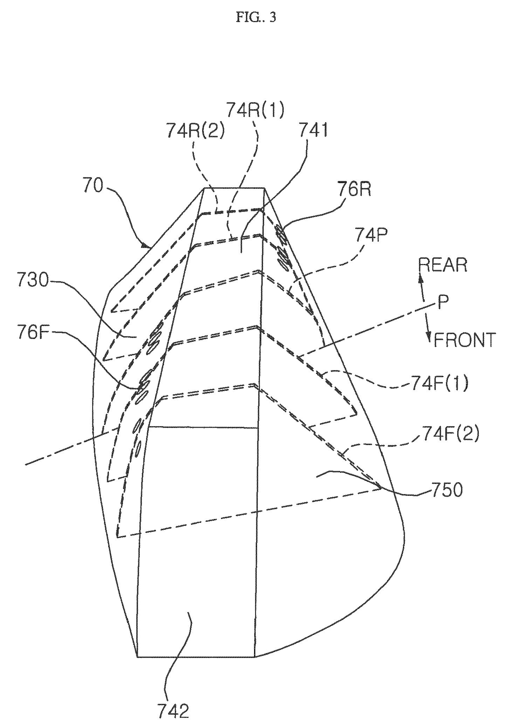

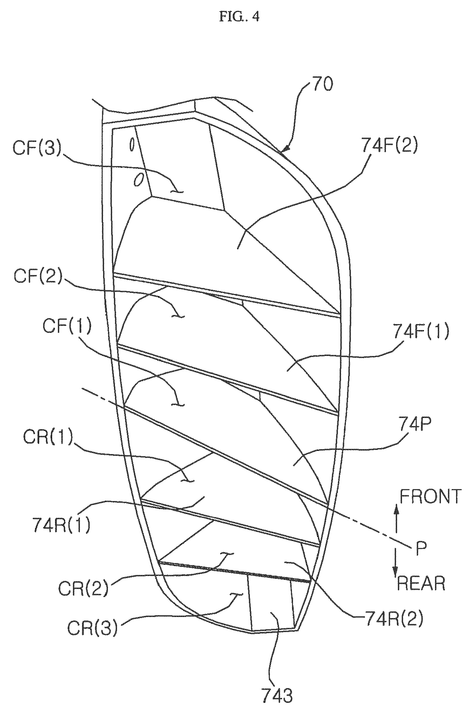

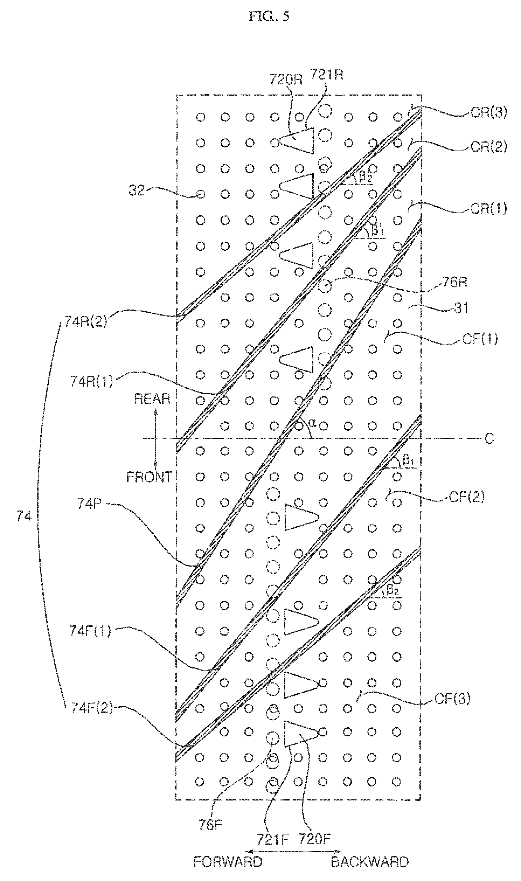

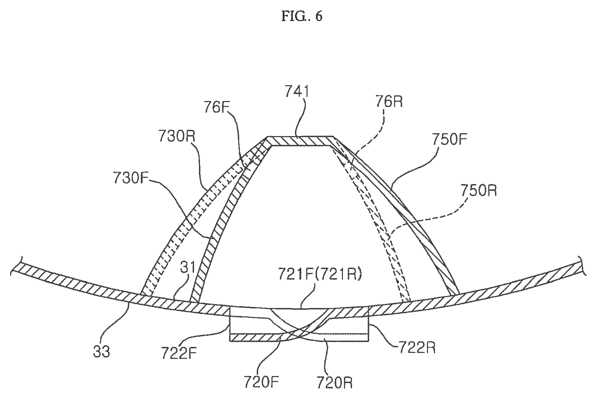

FIG. 1 is a view illustrating a washing machine according to an embodiment of the present invention. FIG. 2 is a view illustrating a portion of a drum of FIG. 1. FIG. 3 is a perspective view of a lifter. FIG. 4 is a perspective view illustrating the inside of the lifter of FIG. 3 when viewed from the bottom. FIG. 5 is a plan view illustrating the inside of the lifter of FIG. 3. FIG. 6 is a view illustrating overlapped cross-sections taken along S1 and S2 of FIG. 2.

Referring to FIG. 1, a washing machine 1 according to an embodiment of the present invention includes a tub 20 disposed inside a casing and holding wash water, a drum 30 disposed inside the tub 20 and rotating while being loaded with laundry, a driving part 40 rotating the drum 30, and a controller 15 for controlling operations of components of the washing machine 1.

The casing may include a cabinet 11 having a front side and an upper side opened, a cabinet cover 12 disposed at the front side of the cabinet 11, and a top plate 18 disposed at the upper side of the cabinet 11. The cabinet cover 12 may be provided with a laundry loading hole such that laundry can be loaded/unloaded into/from the drum 30 and a door 13 pivotably disposed at the cabinet cover 12 to open/close the laundry loading hole.

Also, a gasket 21 may be disposed between the inlet of the drum 30 and the laundry loading hole to alleviate a shock delivered to the door 13 during the rotation of the drum 30 and simultaneously prevent a leakage of wash water from the tub 20 to the outside.

A spring 14 and/or a damper 16 may also be provided to absorb vibration during the rotation of the drum 30. The tub 20 may be elastically supported by the spring 14 and/or damper 16 inside the cabinet 11.

The drum 30 may have a plurality of holes 32 such that wash water can flow between the tub 20 and the drum 30. According to an embodiment, a plurality of embosses may protrude from the inner circumferential surface 31 (see Fig. 2) of the drum 30, and holes 32 may be formed on the embosses.

The driving part 40 may rotate the drum 30. The driving part 40 may include a motor and a driver controlling the motor. The driving part 40 may be controlled by the controller 15 to rotate the drum 30 in various manners. The drum 30 may rotate in a certain direction according to the control of the driving part 40. Hereinafter, one rotation direction of the drum 30 will be defined as first or forward rotation direction, and the other rotation direction of the drum 30 will be defined as second or backward rotation direction.

A water supply valve 53, a detergent box 52, a water supply hose 51, and a water supply bellows 54 may be disposed in the cabinet 11. The water supply valve 53 may serve to receive wash water from an external water source. The detergent box 52 may contain detergent or fabric softner. Wash water and detergent may be mixed in the detergent box 52. The water supply hose 51 may guide wash water introduced through the wash water valve 53 to the detergent box 52. The wash water bellows 54 may supply wash water mixed with detergent in the detergent box 52 into the drum 30.

Also, an outlet hose 62, a pump 63, a circulation hose 64, a nozzle 65, and a drain hose 66 may be disposed in the cabinet 11. The outlet hose 62 may discharge wash water out of the tub 20. The pump 63 may pump wash water out of the tub 20. The circulation hose 64 may guide wash water to the drum 30. The nozzle 65 may be disposed at the gasket 21 to serve to introduce wash water into the drum 30. The drain hose 66 may guide wash water to the outside.

The controller 15 may receive inputs of a user, and may control the overall operations of the washing machine. Also, the controller 15 may display a current operation state of the washing machine. The controller 15 may be disposed at an upper portion of the cabinet cover 12. The controller 15 may include a plurality of operation buttons receiving the inputs of a user, a Micom controlling the operation of the washing machine, and a display device such as a display.

Referring to FIGS. 2 and 5, at least one inlet 721F and 721R may be formed in the drum 30 to receive wash water contained in the tub 20. The inlets 721F and 721R may be formed in plurality. At least a portion of the plurality of inlets 721F and 721R may be arranged along the longitudinal direction of the drum 30. The inlets 721F and 721R may include a front inlet 721F allowing wash water to flow into a front chamber 78F and a rear inlet 721R allowing wash water to flow into a rear chamber 78R.

A lifter 70 may extend along the longitudinal direction from the front side to the rear side of the drum 30, and may form a chamber 78 with the inner circumferential surface 31 of the drum 30. Wash water introduced through the inlets 721F and 721R is contained in the chamber 78. The lifter 70 has more than one discharge holes 76F or 76R to discharge wash water inside the chamber 78 into the drum 30. During the rotation of the drum 30, when the location of the lifter 70 reaches a certain height, wash water may be discharged out of the chamber 78 through the discharge holes 76F and 76R. The discharge holes 76F and 76R may be formed to be smaller than the inlets 721F and 721R of the drum or inlets 722F and 722R of scoops 720F and 720R described later.

The lifter 70 may be formed in plurality. In this case, the lifters 70 adjacent to each other may form a certain angle (e.g., about 120 degrees) based on the center of the drum 30. Also, the lifter 70 may serve to draw up laundry during the rotation of the drum 30 as well as to draw up wash water to discharge wash water.

A partition 74P divides the chamber 78 into the front chamber 78F and the rear chamber 78R along the longitudinal direction of the drum 30. In this case, based on the partition 74P, the lifter 70 is divided into a front lifter 70F forming the front chamber 78F with the drum 30 and a rear lifter 70R forming the rear chamber 78R with the drum 30. In the drawings, the straight line P may extend along the partition, and the front side (F) and the rear side (R) may be divided based on the straight line P.

The partition 74P doesn't extend parallelly to the rotational axis or the longitudinal direction of the drum 30, but extends at a certain angle α with respect to the circumference C of the drum 30. The partition 74P extends such that a front end a3 thereof obliquely directs to the first or forward rotation direction of the drum 30 and a rear end b3 thereof obliquely directs to the second or backward rotation direction of the drum 30.

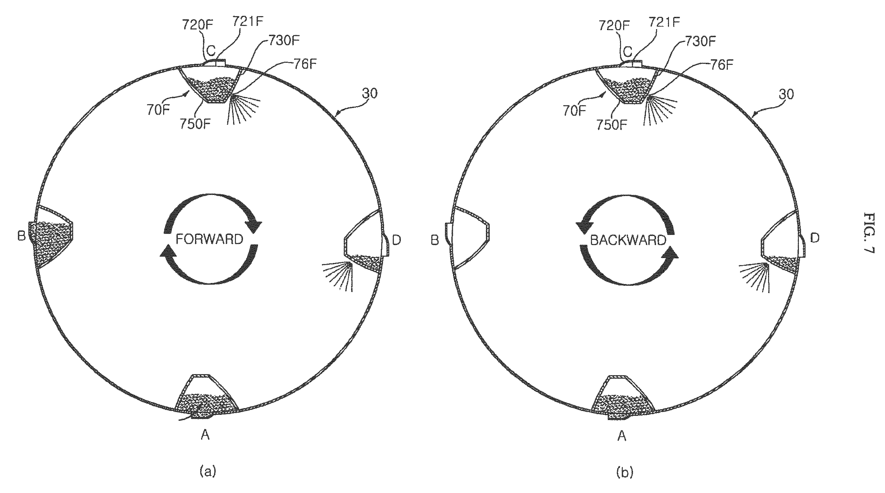

Accordingly, the partition 74P from the front end a3 to the rear end b3 may form an oblique line with respect to the longitudinal direction of the drum 30. As the drum 30 rotates in the forward direction, wash water may be pushed to the backward direction (see FIG. 7) by an inertia force in the front chamber 78F. In this case, a larger space that can accommodate wash water may be provided at the backward side of the front chamber 78F. On the contrary, as the drum 30 rotates in the backward direction, wash water may be pushed to the forward direction by the inertia force in the front chamber 78R. In this case, a larger space that can accommodate wash water may be provided at the forward side of the rear chamber 78R.

In either of the front chamber 78F or the rear chamber 78R divided by the partition 74P, the flow path of wash water may be narrowed from the inlets 721F and 721R to the discharge holes 76F and 76R on the inner circumferential surface 31 of the drum 30. As shown in FIG. 5, the partition 74P may extend at a certain angle with respect to the circumference C of the drum 30, not parallelly to the circumference C of the drum 30. Thus, compared to a case where the partition 74P extends parallelly to the circumference C of the drum 30, when the drum 30 rotates in forward direction, the flow path of wash water on the inner circumferential surface 31 of the drum 30 may be gradually narrowed from the inlet 721F to the discharge hole 76F in the front chamber 78F, reducing the amount of water discharged through the discharge hole 76F and thus holding wash water in the front chamber 78F for a longer time. On the contrary, when the drum 30 rotates in backward direction, the flow path of wash water on the inner circumferential surface 31 of the drum 30 may be gradually narrowed from the inlet 721R to the discharge hole 76R in the rear chamber 78R, reducing the amount of water discharge through the discharge hole 76R and thus holding wash water in the front chamber 78R for a longer time.

When the drum 30 rotates in forward direction, the front lifter 70F needs to discharge wash water at a higher height, if possible. For this, the front discharge hole 76F formed in the front lifter 70F may be opened toward the forward rotation direction of the drum 30. Such discharge holes may be arranged along the longitudinal direction of the drum 30 such that the front discharge holes 76F may be arranged at the forward side and the rear discharge holes 76R may be arranged at the backward side based on a certain line (e.g., L of FIG. 2) extending along the longitudinal direction of the drum 30.

Referring FIGS. 3 and 4, the lifter 70 may include a top surface 741 extending along the longitudinal direction of the drum 30 and first and second side surfaces 730 and 750 that obliquely extend toward the inner circumferential surface 31 of the drum from both sides of the top surface 741, respectively. Also, the front ends of the first and second side surfaces 730 and 750 may be connected to each other by a front surface 742 extending from the top surface 741 to the front side of the drum 30, and the rear ends of the first and second side surfaces 730 and 750 may be connected to each other by a rear surface 743 (see Fig. 2, Fig. 4) extending from the top surface 741 to the rear side of the drum 30.

The first side surface 730 may include a portion, the inclination of which becomes gentler from the front side to the rear side. Here, the inclination may refer to a slope of a boundary between the first side surface 730 and the top surface 741 with respect to the inner circumferential surface 31 of the drum 30. On the other hand, the second side surface 750 may include a portion, the inclination of which becomes steeper from the front side to the rear side. In FIG. 2, a boundary (connection line among a1, a2, a3, a4 and a5) between the first side surface 730 and the inner circumferential surface 31 of the drum 30 may gradually become distant from the center L of the top surface 743 as the boundary goes to the rear side of the drum 30. Also, a boundary (connection line among b1, b2, b3, b4 and b5) between the second side surface 750 and the inner circumferential surface 31 of the drum 30 may gradually become closer from the center L of the top surface 743 as the boundary goes to the rear side of the drum 30.

The first side surface 730 may be divided into a front first side surface 730F and a rear first side surface 730R based on the partition 74P. In this case, the front discharge hole 76F may be formed in the front first side surface 730F.

Similarly, the second side surface 750 may be divided into a front second side surface 750F and a rear second side surface 750R based on the partition 74P. In this case, the rear discharge hole 76R may be formed in the rear second side surface 750R.

Meanwhile, the scoops 720F and 720R may protrude from the outer circumferential surface 33 (see Fig. 6) of the drum 30 to guide wash water to the inside of the chamber 78 through the inlets 721F and 721R of the scoops 720F and 720R. The scoops 720F and 720R may be formed in plurality, and may be divided into a front scoop 720F that allows wash water to flow into the front chamber 78F and a second scoop 720R that allows wash water to flow into the rear chamber 78R.

Regardless of the scoops 720F and 720R, when the level of wash water inside the tub 20 reaches a height at which the inlets 721F and 721R sink, wash water can be introduced through the inlets 721F and 721R. However, the scoops 720F and 720R may further increase the amount of wash water through the inlets 721F and 721R. Accordingly, when the lifter 70 is located at a lowest position, the water lever of the chamber 78 may become higher than the water level of the tub 20. Also, the scoops 720F and 720R themselves may serve to hold a certain amount of wash water, and may reduce the amount of wash water reversely leaking from the chamber 78 through the inlets 721F and 721R during the rising of the lifter 70 according to the rotation of the drum 30. The reduction of the water leakage may mean that the amount of water discharged through the discharge holes 76F and 76R can increase.

The front scoop 720F may be opened toward the forward rotation direction of the drum 30 such that wash water can be actively introduced into the front chamber 78F during the forward rotation of the drum 30. On the contrary, the rear scoop 720R may be opened toward the backward rotation direction of the drum 30 such that wash water can be actively introduced into the rear chamber 78R during the backward rotation of the drum 30.

Separation partitions 74F(1), 74F(2), 74R(1), 74R(2) may divide the chamber 78 into a plurality of flow sections CF(1), CF(2), CF(3), CR(1), CR(2) and CR(3). These separation partitions may include front separation partitions 74F(1) and 74F(2) that divide the front chamber 78F into a plurality of flow sections CF(1), CF(2) and CF(3) and rear separation partitions 74R(1) and 74R(2) that divide the rear chamber 78R into a plurality of flow sections CR(1), CR(2) and CR(3).

The separation partitions 74F(1), 74F(2), 74R(1) and 74R(2) may connect between the drum 30 and the lifter 70. Each of the flow sections CF(1), CF(2), CF(3), CR(1), CR(2) and CR(3) may be provided with at least one inlet 721F or 721R for inflow of wash water into the corresponding flow section and at least one discharge hole 76F or 76R for discharge of wash water out of the corresponding flow section.

The flow sections CF(1), CF(2), CF(3), CR(1) and CR(2) divided by the separation partitions 74F(1), 74F(2), 74R(1) and 74R(2) may be formed such that the flow path of wash water on the inner circumferential surface 31 of the drum 30 becomes narrower from the inlets 721F and 721R to the discharge holes 76F and 76R. Similarly to the partition 74P, the front ends of the separation partitions 74F(1), 74F(2), 74R(1) and 74R(2) may obliquely directs to the forward rotation direction, and the rear ends thereof may obliquely directs to the backward rotation direction.

Furthermore, angles between the circumference C of the drum 30 and the separation partitions 74F(1) and 74F(2) dividing the front chamber 78F may gradually decrease from the partition 74P to the front side of the drum 30 (β1> β2), and similarly, angles between the circumference C of the drum 30 and the separation partitions 74R(1) and 74R(2) dividing the rear chamber 78R may gradually decrease from the partition 74P to the rear side of the drum 30 (β'1> β'2), such that the flow section CF(1) or CR(1) between the partition 74P and the partition 74F(1) or 74R(1) or the flow section CF(2) or CR(2) between adjacent separation partitions (between the separation partitions 74F(1) and 74F(2) or between the separation partitions 74R(1) and 74R(2)) is gradually narrowed in flow path of wash water on the inner circumferential surface 31 of the drum 30 from the inlet 721F or 721R to the discharge hole 76F or 76R.

FIG. 7 is a view illustrating a position change of the front lifter 70F according to a rotation of the drum 30, in which 7A shows a position change during the forward rotation of the drum 30 and 7B shows a position change during the backward rotation of the drum 30.

Referring to FIG. 7A, when the drum 30 rotates in the forward direction, wash water may flow into the front chamber 78F through the front scoop 720F at the lowest location of the front lifter 70F (see location A). The water level inside the tub 20 needs to reach a level at which the scoop 720F can sink even at the lowest location, and preferably, may be higher than the height of the inlet 721F.

A location B may be any point while the front lifter 70F is rising according to the rotation of the drum 30. The location B is a location where the discharge of wash water through the front discharge hole 76F does not yet occur. Thereafter, as the drum 30 continuously rotates, the location of the front lifter 70F may rise to the highest point (location C). In this case, the height of the front discharge hole 76F may become lower than the water lever of the front chamber 78F, allowing wash water to be discharged through the front discharge hole 76F.

A location D may be any point while the front lifter 70F is falling according to the rotation of the drum 30. At this point, the discharge of wash water through the front discharge hole 76F may occur.

During the rotation of the drum 30, wash water inside the front chamber 78F intends to be pushed to the opposite direction to the rotation direction of the drum by an inertia force. Accordingly, the amount of wash water discharged through the front discharge hole 76F may be influenced by the rotation speed of the drum 30.

The washing machine 1 may variously change the rotation speed of the drum 30 during the operation thereof, thereby variously changing the position of laundry inside the drum 30 and thus removing contaminants from laundry. In this case, since the rotation speed of the drum 30 relates to a centrifugal force acting on laundry, the maximum rising height of laundry immediately before laundry drops may vary with the rotation speed of the drum 30.

For example, the rotation speed of the drum may be controlled to be about 50 rpm during a washing operation, and in the technical field of washing machine, the rotation speed of about 50 rpm may be significantly lower than the laundry adhesion speed (about 100 rpm) in which the drum 30 rotates while laundry is adhering to the inner surface of the drum 30. Accordingly, laundry lifted by the rotation of the drum 30 may drop at a certain height, thereby enabling the washing of laundry by a physical impact upon drop. This washing operation may be performed while wash water (hereinafter, referred to as detergent water) dissolved with detergent is contained in the tub 20. During the rotation of the drum 30, since detergent water circulates into the tub 20 after sequentially passing through the tub 20, the inlets 721F and 721R, the chamber 78, the discharge holes 76F and 76R, and the drum 30, detergent can be uniformly mixed in this circulation process, and detergent water discharged through the discharge holes 76F and 76R may directly hit on laundry, thereby improving the washing performance.

On the other hand, a laundry soaking operation may be exemplified as a case where the rotation speed of the drum 30 is controlled to be lower than the speed of the washing operation. The laundry soaking operation may be focused on sufficient soaking of laundry in wash water instead of considering an impact upon drop of laundry. In this case, the rotation speed of the drum 30 may be controlled to be lower (e.g., about 30 rpm) such that laundry can be evenly dispersed at a lower part of the drum 30. During the laundry soaking operation, since the rotation cycle is longer than that of the washing operation and thus the amount of wash water discharged through the discharge holes 76F and 76R for one rotation cycle is larger than that of the washing operation, laundry can be effectively soaked.

Referring to FIG. 7B, when the drum 30 rotates in the backward direction, the front lifter 70F may sequentially pass the locations A, D, C and B.

At the lowest point (location A), wash water may flow into the front chamber 78F through the inlet 721F. The water level inside the tub 20 may be higher than the height of the inlet 721F. In this case, although the opened direction of the front scoop 720F is opposite to the rotation direction of the drum 30, wash water may be slightly introduced through the inlets 721F and 721R.

The location D may be any point while the front lifter 70F is rising according to the rotation of the drum 30. At this point, wash water may be discharged through the front discharge hole 76F.

Thereafter, as the drum 30 continuously rotates, the front lifter 70F may fall passing through the highest point (location C). While the front lifter 70F is falling passing a certain location, the discharge of wash water through the front discharge hole 76F may be stopped. The location B shows that wash water is not discharged any more through the front discharge hole 76F at the falling section of the front lifter 70F.

During the backward rotation of the drum 30, since the wash water is pushed to the front first side surface 730F having the front discharge hole 76F formed therein by an inertia force, most wash water inside the front chamber 78F may be discharged for one rotation cycle of the drum 30. At the location B of FIG. 7B, all wash water inside the front chamber 78F may be discharged during the falling of the front lifter 70F.

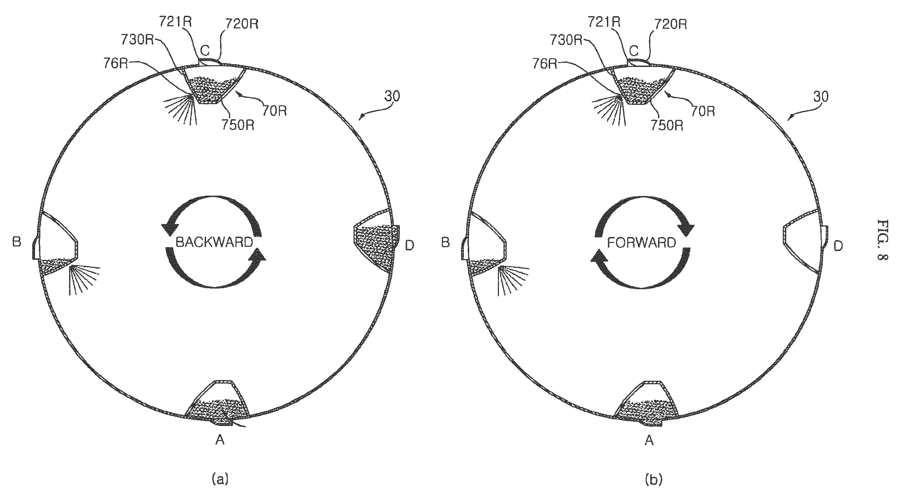

FIG. 8 is a view illustrating a position change of the rear lifter 70R according to the rotation of the drum 30, in which 8A shows a position change during the backward rotation of the drum 30 and 8B shows a position change during the forward rotation of the drum 30. Compared to FIG. 7, since FIG. 8 may be similar in principle except that water storage or discharge is performed by the front lifter 70R, a detailed description thereof will be omitted. Hereinafter, effects derived from an interaction between the front lifter 70F and the rear lifter 70R during the rotation of the drum 30 will be described in consideration of FIGS. 7 and 8.

As shown in FIG. 7A, when the drum 30 rotates in the forward direction, wash water contained in the front chamber 78F may be discharged at the location D but may not be discharged at the location B. On the other hand, as shown in FIG. 8B, wash water contained in the rear chamber 78R may not be discharged at the location D, but may be discharged at the location B. That is, since wash water contained in the front chamber 78F and wash water contained in the rear chamber 78R may not be discharged in the same pattern but in a certain section where wash water contained in one chamber is not discharged, wash water contained in the other chamber may be discharged, a section where the discharge of wash water is stopped during the rotation of the drum 30 can be minimized, or wash water may be continuously discharged without a section where the discharge of wash water is stopped.

Similarly, when the drum 30 rotates in the backward direction, wash water may be complementarily discharged out of the front chamber 78F and the rear chamber 78R, which can be seen by comparing FIGS. 7 and 8.

In the following, examples of the invention are given:
A washing machine comprising:
   a tub containing wash water;
   a drum rotating inside the tub and having more than one inlet to introduce wash water contained in the tub;
   a lifter forming a chamber holding wash water introduced through the inlet together with the drum and discharging wash water into the drum through a plurality of discharge holes arranged from a front side to a rear side inside the chamber during the rotation of the drum; and
   a partition dividing the chamber into a front chamber and a rear chamber along a longitudinal direction of the drum and forming a certain angle with respect to a circumference of the drum.

The partition comprises a front end obliquely directing to a forward rotation direction of the drum and a rear end obliquely directing to a backward rotation direction of the drum.

The partition may be formed in the front or rear chamber such that a flow path of wash water on an inner circumferential surface of the drum gradually becomes narrower from the inlet to the discharge hole.

The plurality of discharge holes of the lifter discharging wash water inside the front chamber may be opened in a forward rotation direction of the drum, and the plurality of discharge holes of the lifter discharging wash water inside the rear chamber may be opened in a backward direction of the drum.

The inlet may be disposed in plurality along the longitudinal direction of the drum.

At least one scoop may protrude from an outer circumferential surface of the drum to draw up wash water of tub into the chamber.

The at least one scoop may comprise:
a front scoop opened toward a forward rotation direction of the drum to draw up wash water into the front chamber; and
a rear scoop opened toward a backward rotation direction of the drum to draw up wash water into the rear chamber.

The partition may connect between the drum and the lifter.

The washing machine may further comprise at least one separation partition protruding from an inner circumferential surface to divide the front chamber or the rear chamber into a plurality of flow sections.

The separation partition may connect between the drum and the lifter and the inlets and the discharge holes are disposed so as to correspond to each flow section.

The flow sections divided by the separation partitions may be formed such that a flow path of wash water on the inner circumferential surface of the drum becomes narrower from the inlet to the discharge hole.

The lifter may comprise first and second side surfaces that extend at a certain inclination angle with respect to an inner circumferential surface of the drum to form the chamber, and an inclination of the first side surface gradually becomes gentler from a front side to a rear side of the chamber and an inclination of the second side surface gradually becomes steeper from the front side to the rear side of the chamber.

The plurality of discharge holes may comprise front discharge holes formed in a front side portion of the first side surface based on the partition and rear discharge holes formed in a rear side portion of the second side surface based on the partition.

The plurality of discharge holes may comprise:
front discharge holes arranged along the longitudinal direction of the drum to discharge wash water out of the front chamber; and
rear discharge holes arranged along the longitudinal direction of the drum to discharge wash water out of the rear chamber, and
based on a certain line extending along the longitudinal direction of the drum, the front discharge holes are arranged at a side of a forward rotation direction of the drum and the rear discharge holes are arranged at a side of a backward rotation direction of the drum.

Further, when one of the front chamber and the rear chamber is stopped from discharging wash water during the rotation of the drum, the other chamber discharges wash water.

According to a further embodiment, a washing machine may comprise:
a tub containing wash water;
a drum rotating inside the tub and having more than one inlet to introduce wash water contained in the tub;
a lifter rotating integrally with the drum and drawing up wash water introduced through the inlet to discharge wash water into the drum; and
a partition forming a boundary dividing an internal space of the lifter containing wash water introduced through the inlet into a front chamber and a rear chamber, the boundary forming a certain angle with respect to a circumference of the drum.

At least one scoop may protrude from an outer circumferential surface of the drum to draw up wash water of tub into the chamber.

The at least one scoop may comprise:
a front scoop opened toward a forward rotation direction of the drum to draw up wash water into the front chamber; and
a rear scoop opened toward a backward rotation direction of the drum to draw up wash water into the rear chamber.

The lifter may comprise first and second side surfaces that extend at a certain inclination angle with respect to an inner circumferential surface of the drum to form the front chamber and the rear chamber, and an inclination of the first side surface gradually becomes gentler from a front side to a rear side of the chamber and an inclination of the second side surface gradually becomes steeper from the front side to the rear side of the chamber.

Further, when one of the front chamber and the rear chamber is stopped from discharging wash water during the rotation of the drum, the other chamber may discharge wash water.

## Claims

1. A washing machine (1) comprising:
a tub (20) containing wash water;
a drum (30) rotating inside the tub (20) and having more than one inlet (721F, 721R) to introduce wash water contained in the tub (20);
a lifter (70) forming together with the drum (30) a chamber (78) that holds wash water introduced through the inlets (721F, 721R), the lifter (70) having a plurality of discharge holes (76F, 76R) through which wash water within the chamber (78) is discharged into the drum (30) during the rotation of the drum (30), the lifter comprising a first side surface (730) facing toward a first rotation direction of the drum (30) and a second side surface (750) facing toward a second rotation direction of the drum (30); and
a partition (74P) dividing the chamber (78) into a front chamber (78F) and a rear chamber (78R) along a longitudinal direction (L) of the drum (30), wherein the inlets (721F, 721R) comprise a first inlet (721F) which communicates with the front chamber (730) and a second inlet (721R) which communicates with the rear chamber (750);
**characterized in that**
the partition (74P) is disposed at an oblique angle with respect to a circumferential line (C) of the drum (30), and the partition (74P) has a front end (a3) at the first side surface (730) and a rear end (b3) at the second side surface (750),
wherein the first side surface (730) has a first discharge hole (76F) which communicates with the front chamber (730) and the second side surface (750) has a second discharge hole (76R) which communicates with the rear chamber (750).

2. The washing machine of claim 1, wherein the partition (74P) is formed such that flow paths of wash water in the chamber (78) on an inner circumferential surface (31) of the drum (30) gradually become narrower from the inlets (721F, 721R) to the discharge holes (76F, 76R).

3. The washing machine of any one of the claims 1 and 2, wherein the first discharge hole (76F) is opened in the first rotation direction of the drum (30), and the second discharge hole (76R) is opened in the second direction of the drum (30).

4. The washing machine of any one of the claims 1 to 3, wherein the inlets (721F, 721R) are disposed in plurality along the longitudinal direction of the drum (30).

5. The washing machine of any one of the claims 1 to 4, comprising at least one scoop (720F, 720R) protruding from an outer circumferential surface (33) of the drum (30) to draw wash water in the tub (20) into the chamber (78) and in fluid communication respectively with one of the inlets (72F, 72R).

6. The washing machine of claim 5, wherein the at least one scoop (720F, 720R) comprises:
a front scoop (720F) in fluid communication with the first inlet (721F) and opening toward the first rotation direction of the drum (30) to draw wash water into the front chamber (78F); and
a rear scoop (720R) in fluid communication with the second inlet (721R) and opening toward the second rotation direction of the drum (30) to draw wash water into the rear chamber (78R).

7. The washing machine of any one of the claims 1 to 6, wherein the partition (74P) extends between an inner circumferential surface of the drum (30) and an inner surface of the lifter (70).

8. The washing machine of any one of the claims 1 to 7, further comprising at least one separation partition (74F(1), 74F(2), 74R(1), 74R(2)) dividing the front chamber (78F) or the rear chamber (78R) into a plurality of flow sections (CF(1), CF(2), CF(3), CR(1), CR(2), CR(3)).

9. The washing machine of claim 8, wherein the separation partition extends between an inner circumferential surface of the drum (30) and an inner circumferential surface of lifter (70), and some of the inlets (721F, 721R) and some of the discharge holes (76F, 76R) are disposed to correspond to each flow section.

10. The washing machine of claim 8 or 9, wherein the flow sections are formed such that a flow path of wash water becomes narrower from the inlets (721F, 721R) to the discharge holes (76F, 76R).

11. The washing machine of any one of the claims 1 to 10, wherein the first and second side surfaces (730, 750) extend at a certain inclination angle with respect to an inner circumferential surface (31) of the drum (30) to form the chamber (78), and an inclination of the first side surface (730) gradually becomes gentler from a front side to a rear side of the chamber (78) and an inclination of the second side surface (750) gradually becomes steeper from the front side to the rear side of the chamber (78).

12. The washing machine of claim 11, wherein the plurality of discharge holes (76F, 76R) comprises front discharge holes (76F) formed in a front side portion of the first side surface (730) about the partition and a rear discharge holes (76R) formed in a rear side portion of the second side surface (750) about the partition.

13. The washing machine of any one of the claims 1 to 12, wherein the first discharge hole (76F) comprises a plurality of first discharge holes (76F) arranged along the longitudinal direction of the drum (30), and the second discharge hole (76R) comprises a plurality of second discharge holes (76R) arranged along the longitudinal direction of the drum (30).

14. The washing machine of any one of the claims 1 to 13, wherein when one of the front chamber (78F) and the rear chamber (78R) is stopped from discharging wash water during the rotation of the drum, the other chamber discharges wash water.

## Patentansprüche

1. Waschmaschine (1), die Folgendes umfasst:
einen Bottich (20), der Waschwasser enthält;
eine Trommel (30), die sich in dem Bottich (20) dreht und mehr als einen Einlass (721F, 721R) aufweist, um Waschwasser, das in dem Bottich (20) enthalten ist, einzuleiten;
ein Hebeelement (70), das zusammen mit der Trommel (30) eine Kammer (78) bildet, die Waschwasser, das durch die Einlässe (721F, 721R) eingeleitet wird, enthält, wobei das Hebeelement (70) mehrere Abflusslöcher (76F, 76R) aufweist, durch die während der Drehung der Trommel (30) Waschwasser in der Kammer (78) in die Trommel (30) abgeführt wird, wobei das Hebeelement eine erste Seitenfläche (730), die in eine erste Drehrichtung der Trommel (30) zeigt, und eine zweite Seitenfläche (750), die in eine zweite Drehrichtung der Trommel (30) zeigt, umfasst; und
eine Unterteilung (74P), die die Kammer (78) in einer Längsrichtung (L) der Trommel (30) in eine vordere Kammer (78F) und eine hintere Kammer (78R) teilt, wobei die Einlässe (721F, 721R) einen ersten Einlass (721F), der mit der vorderen Kammer (730) kommuniziert, und einen zweiten Einlass (721R), der mit der hinteren Kammer (750) kommuniziert, umfassen
**dadurch gekennzeichnet, dass**
die Unterteilung (74P) in einem schiefen Winkel in Bezug auf eine Umfangslinie (C) der Trommel (30) angeordnet ist und dass die Unterteilung (74P) ein vorderes Ende (a3) an der ersten Seitenfläche (730) und ein hinteres Ende (b3) an der zweiten Seitenfläche (750) aufweist,
wobei die erste Seitenfläche (730) ein erstes Abflussloch (76F) aufweist, das mit der vorderen Kammer (730) kommuniziert, und die zweite Seitenfläche (750) ein zweites Abflussloch (76R) aufweist, das mit der hinteren Kammer (750) kommuniziert.

2. Waschmaschine nach Anspruch 1, wobei die Unterteilung (74P) so ausgebildet ist, dass Strömungspfade von Waschwasser in der Kammer (78) an einer Innenumfangsfläche (31) der Trommel (30) von den Einlässen (721F, 721R) zu den Abflusslöchern (76F, 76R) schrittweise enger werden.

3. Waschmaschine nach einem der Ansprüche 1 und 2, wobei das erste Abflussloch (76F) in der ersten Drehrichtung der Trommel (30) geöffnet ist und wobei das zweite Abflussloch (76R) in der zweiten Drehrichtung der Trommel (30) geöffnet ist.

4. Waschmaschine nach einem der Ansprüche 1 bis 3, wobei mehrere Einlässe (721F, 721R) in der Längsrichtung der Trommel (30) angeordnet sind.

5. Waschmaschine nach einem der Ansprüche 1 bis 4, die wenigstens ein Schaufelelement (720F, 720R) umfasst, das von einer Außenumfangsfläche (33) der Trommel (30) vorsteht, um Waschwasser in dem Bottich (20) in die Kammer (78) zu saugen, die jeweils mit einem der Einlässe (72F, 72R) in Fluidkommunikation ist.

6. Waschmaschine nach Anspruch 5, wobei das wenigstens eine Schaufelelemente (720F, 720R) Folgendes umfasst:
ein vorderes Schaufelelement (720F) in Fluidkommunikation mit dem ersten Einlass (721F) und einer Öffnung in Richtung der ersten Drehrichtung der Trommel (30), um Waschwasser in die vordere Kammer (78F) zu saugen; und
ein hinteres Schaufelelement (720R) in Fluidkommunikation mit dem zweiten Einlass (721R) und einer Öffnung in Richtung der zweiten Drehrichtung der Trommel (30), um Waschwasser in die hintere Kammer (78R) zu saugen.

7. Waschmaschine nach einem der Ansprüche 1 bis 6, wobei sich die Unterteilung (74P) zwischen einer Innenumfangsfläche der Trommel (30) und einer inneren Oberfläche des Hebeelements (70) erstreckt.

8. Waschmaschine nach einem der Ansprüche 1 bis 7, die ferner wenigstens eine Teilungswand (74F(1), 74F(2), 74R(1), 74R(2)) umfasst, die die vordere Kammer (78F) oder die hintere Kammer (78R) in mehrere Strömungsabschnitte (CF(1), CF(2), CF(3), CR(1), CR(2), CR(3)) unterteilt.

9. Waschmaschine nach Anspruch 8, wobei sich die Teilungswand zwischen einer Innenumfangsfläche der Trommel (30) und einer Innenumfangsfläche des Hebeelements (70) erstreckt und wobei einige der Einlässe (721F, 721R) und einige der Abflusslöcher (76F, 76R) so angeordnet sind, dass sie dem jeweiligen Strömungsabschnitt entsprechen.

10. Waschmaschine nach Anspruch 8 oder 9, wobei die Strömungsabschnitte so ausgebildet sind, dass ein Strömungspfad von Waschwasser von den Einlässen (721F, 721R) zu den Abflusslöchern (76F, 76R) enger wird.

11. Waschmaschine nach einem der Ansprüche 1 bis 10, wobei sich die erste und die zweite Seitenfläche (730, 750) in einem bestimmten Neigungswinkel in Bezug auf eine Innenumfangsfläche (31) der Trommel (30) erstrecken, um die Kammer (78) zu bilden, und wobei eine Neigung der ersten Seitenfläche (730) von einer Vorderseite zu einer Rückseite der Kammer (78) schrittweise flacher wird und wobei eine Neigung der zweiten Seitenfläche (750) von der Vorderseite zu der Rückseite der Kammer (78) schrittweise steiler wird.

12. Waschmaschine nach Anspruch 11, wobei die mehreren Abflusslöcher (76F, 76R) vordere Abflusslöcher (76F), die in einem Vorderseitenabschnitt der ersten Seitenfläche (730) um die Teilung ausgebildet sind, und hintere Abflusslöcher (76R), die in einem Rückseitenabschnitt der zweiten Seitenfläche (750) um die Teilung ausgebildet sind, umfassen.

13. Waschmaschine nach einem der Ansprüche 1 bis 12, wobei das erste Abflussloch (76F) mehrere erste Abflusslöcher (76F), die in der Längsrichtung der Trommel (30) angeordnet sind, umfasst und wobei das zweite Abflussloch (76R) mehrere zweite Abflusslöcher (76R), die in der Längsrichtung der Trommel (30) angeordnet sind, umfasst.

14. Waschmaschine nach einem der Ansprüche 1 bis 13, wobei in dem Fall, in dem das Abführen von Waschwasser von der vorderen Kammer (78F) oder der hinteren Kammer (78R) während der Drehung der Trommel gestoppt wird, die andere Kammer Waschwasser abführt.

## Revendications

1. Machine à laver (1) comprenant :
une cuve (20) contenant de l'eau de lavage ;
un tambour (30) en rotation à l'intérieur de la cuve (20) et ayant plus d'une entrée (721F, 721R) pour introduire l'eau de lavage contenue dans la cuve (20) ;
un moyen de soulèvement (70) formant conjointement avec le tambour (30) une chambre (78) qui contient de l'eau de lavage introduite à travers les entrées (721F, 721R), le moyen de soulèvement (70) ayant une pluralité de trous de décharge (76F, 76R) à travers lesquels l'eau de lavage à l'intérieur de la chambre (78) est déchargée jusque dans le tambour (30) pendant la rotation du tambour (30), le moyen de soulèvement comprenant une première surface latérale (730) tournée vers une première direction de rotation du tambour (30) et une seconde surface latérale (750) tournée vers une seconde direction de rotation du tambour (30) ; et
une cloison (74P) qui divise la chambre (78) en une chambre avant (78F) et une chambre arrière (78R) le long d'une direction longitudinale (L) du tambour (30), dans laquelle les entrées (721F, 721R) comprennent une première entrée (721F) qui communique avec la chambre avant (730) et une seconde entrée (721R) qui communique avec la chambre arrière (750) ;
**caractérisée en ce que**
la cloison (74P) est disposée sous un angle oblique par rapport à une ligne circonférentielle (C) du tambour (30), et la cloison (74P) a une extrémité avant (a3) au niveau de la première surface latérale (730) et
une extrémité arrière (b3) au niveau de la seconde surface latérale (750),
dans laquelle la première surface latérale (730) a un premier trou de décharge (76F) qui communique avec la chambre avant (730), et la seconde surface latérale (750) a un second trou de décharge (76R) qui communique avec la chambre arrière (750).

2. Machine à laver selon la revendication 1, dans laquelle la cloison (74P) est formée de telle façon que les trajets d'écoulement de l'eau de lavage dans la chambre (78) sur une surface circonférentielle intérieure (31) du tambour (30) deviennent plus étroits depuis les entrées (721F, 721R) vers les trous de décharge (76F, 76R).

3. Machine à laver selon l'une quelconque des revendications 1 et 2, dans laquelle le premier trou de décharge (76F) est ouvert dans la première direction de rotation du tambour (30), et le second trou de décharge (76R) est ouvert dans la seconde direction du tambour (30).

4. Machine à laver selon l'une quelconque des revendications 1 à 3, dans laquelle les entrées (721F, 721R) sont disposées en pluralité le long de la direction longitudinale du tambour (30).

5. Machine à laver selon l'une quelconque des revendications 1 à 4, comprenant au moins une écope (720F, 720R) en projection depuis une surface circonférentielle extérieure (33) du tambour (30) pour tirer de l'eau de lavage dans la cuve (20) jusque dans la chambre (78) et en communication fluidique respectivement avec l'une des entrées (72F, 72R).

6. Machine à laver selon la revendication 5, dans laquelle ladite au moins une écope (720F, 720R) comprend :
une écope avant (720F) en communication fluidique avec la première entrée (721F) et s'ouvrant vers la première direction de rotation du tambour (30) pour tirer de l'eau de lavage jusque dans la chambre avant (78F) ; et
une écope arrière (720R) en communication fluidique avec la seconde entrée (721R) et s'ouvrant vers la seconde direction de rotation du tambour (30) pour tirer de l'eau de lavage jusque dans la chambre arrière (78R).

7. Machine à laver selon l'une quelconque des revendications 1 à 6, dans laquelle la cloison (74P) s'étend entre une surface circonférentielle intérieure du tambour (30) et une surface intérieure du moyen de soulèvement (70).

8. Machine à laver selon l'une quelconque des revendications 1 à 7, comprenant en outre au moins une cloison de séparation (74F(1), 74F(2), 74R(1), 74R(2)) qui divise la chambre avant (78F) ou la chambre arrière (78R) en une pluralité de sections d'écoulement (CF(1), CF(2), CF(3), CR(1), CR(2), CR(3)).

9. Machine à laver selon la revendication 8, dans laquelle la cloison de séparation s'étend entre une surface circonférentielle intérieure du tambour (30) et une surface circonférentielle intérieure du moyen de soulèvement (70), et certaines des entrées (721F, 721R) et certains des trous de décharge (76F, 76R) sont disposés pour correspondre à chaque section d'écoulement.

10. Machine à laver selon la revendication 8 ou 9, dans laquelle les sections d'écoulement sont formées de telle façon qu'un trajet d'écoulement de l'eau de lavage devient plus étroit depuis les entrées (721F, 721R) vers les trous de décharge (76F, 76R).

11. Machine à laver selon l'une quelconque des revendications 1 à 10, dans laquelle la première et la seconde surface latérale (730, 750) s'étendent sous un certain angle d'inclinaison par rapport à une surface circonférentielle intérieure (31) du tambour (30) pour former la chambre (78), et une inclinaison de la première surface latérale (730) devient progressivement plus douce depuis un côté avant vers un côté arrière de la chambre (78), et une inclinaison de la seconde surface latérale (750) devient progressivement plus raide depuis le côté avant vers le côté arrière de la chambre (78).

12. Machine à laver selon la revendication 11, dans laquelle la pluralité de trous de décharge (76F, 76R) comprennent des trous de décharge avant (76F) formés dans une portion latérale avant de la première surface latérale (730) autour de la cloison, et des trous de décharge arrière (76R) formés dans une portion latérale arrière de la seconde surface latérale (750) autour de la cloison.

13. Machine à laver selon l'une quelconque des revendications 1 à 12, dans laquelle le premier trou de décharge (76F) comprend une pluralité de premiers trous de décharge (76F) agencés le long de la direction longitudinale du tambour (30), et le second trou de décharge (76R) comprend une pluralité de seconds trous de décharge (76R) agencés le long de la direction longitudinale du tambour (30).

14. Machine à laver selon l'une quelconque des revendications 1 à 13, dans laquelle, lorsque la décharge d'eau de lavage d'une chambre parmi la chambre avant (78F) et la chambre arrière (78R) est arrêtée pendant la rotation du tambour, l'autre chambre décharge l'eau de lavage.
